# EUROPEAN PATENT APPLICATION

(11) **EP 4 845 169 A1**
(43) Date of publication of application: **25.11.2026**
(21) Application number: 25747436.1
(22) Date of filing: 06.01.2025
(51) Int. Cl.: H04N 23/54

(54) **IMAGE SENSOR DRIVING APPARATUS, OPTICAL APPARATUS, CAMERA MODULE AND ELECTRONIC DEVICE**

(30) Priority: 02.02.2024 CN 202410157036
(71) Applicant: Huawei Technologies Co., Ltd., Shenzhen, Guangdong 518129 (CN)
(72) Inventor: PENG, Shusheng, Shenzhen, Guangdong 518129 (CN); JIANG, Ran, Shenzhen, Guangdong 518129 (CN); QIN, Zhenkai, Shenzhen, Guangdong 518129 (CN); KUO, Li-Te, Shenzhen, Guangdong 518129 (CN); SONG, Baizhe, Shenzhen, Guangdong 518129 (CN); LIU, Zhenghao, Shenzhen, Guangdong 518129 (CN)
(74) Representative: Huawei European IPR
(86) International application number: PCT/CN2025/070865
(87) International publication number: WO 2025/161860

(57) **Abstract**

Embodiments of this application provide an image sensor driving apparatus, an optical apparatus, a camera module, and an electronic device, and pertain to the field of camera technologies. The image sensor driving apparatus includes a fixed base, a circuit board, and an image sensor driving assembly. The circuit board includes a fixed part, a flexible part, and a movable part. The fixed part is connected to the fixed base, the fixed part is mechanically and electrically connected to the movable part through the flexible part, the movable part is configured to mechanically connect to an image sensor, and the movable part includes a light-transmitting through-hole and a connection interface. One end of the light-transmitting through-hole is a light inlet, and the other end of the light-transmitting through-hole is a light outlet facing a photosensitive surface of the image sensor. The connection interface and the light outlet are on a same side of the movable part and configured to mechanically and electrically connect to the image sensor. The image sensor driving assembly is configured to generate a driving force for driving the movable part to move relative to the fixed base. According to the image sensor driving apparatus and the optical apparatus provided in embodiments of this application, a volume of the camera module can be reduced, facilitating miniaturization of the electronic device.

## Description

This application claims priority to Chinese Patent Application No. 202410157036.4, filed with the China National Intellectual Property Administration on February 2, 2024 and entitled "IMAGE SENSOR DRIVING APPARATUS, OPTICAL APPARATUS, CAMERA MODULE, AND ELECTRONIC DEVICE", which is incorporated herein by reference in its entirety.

### TECHNICAL FIELD

Embodiments of this application relate to the field of camera technologies, and in particular, to an image sensor driving apparatus, an optical apparatus, a camera module, and an electronic device.

### BACKGROUND

An electronic device such as a mobile phone or a tablet computer is usually provided with a camera module, so that the electronic device has functions such as taking photos and recording videos. To meet a user requirement for multifunctionality of the electronic device and a design requirement for lightness, thinness, and miniaturization of the electronic device, mounting space reserved by the electronic device for the camera module is limited. In a related technology, a camera module having a large-sized image sensor is used to meet a user requirement for image quality. However, the camera module having the large-sized image sensor has a large size and a large weight. As a result, the camera module occupies a large amount of space in the electronic device, which increases difficulty in miniaturizing the electronic device. Therefore, how to miniaturize the camera module becomes an urgent problem to be resolved.

### SUMMARY

Embodiments of this application provide an image sensor driving apparatus, an optical apparatus, a camera module, and an electronic device, to reduce a volume of the camera module, and reduce difficulty in miniaturizing the electronic device.

A first aspect of this application provides an image sensor driving apparatus, including a fixed base, a circuit board, and an image sensor driving assembly. The circuit board includes a fixed part, a flexible part, and a movable part. The fixed part is connected to the fixed base, the fixed part is mechanically and electrically connected to the movable part through the flexible part, the movable part includes a light-transmitting through-hole and a connection interface, one end of the light-transmitting through-hole is a light inlet, the other end of the light-transmitting through-hole is a light outlet facing a photosensitive surface of an image sensor, and the connection interface and the light outlet are on a same side of the movable part and configured to mechanically and electrically connect to the image sensor. The image sensor driving assembly includes a stationary member and a first movable member. The stationary member is connected to the fixed base, and the first movable member is connected to the movable part. The first movable member is configured to interact with the stationary member to generate a driving force for driving the movable part to move relative to the fixed base, so that the movable part drives the image sensor to move relative to the fixed base.

In a working process of the image sensor driving apparatus, the fixed part of the circuit board is configured to connect to a mainboard of an electronic device, to transmit a signal generated by the image sensor to a processor on the mainboard. In addition, the movable part of the circuit board is further configured to receive a driving force generated by the image sensor driving assembly, so that the image sensor moves relative to the fixed base, to implement an optical image stabilization function.

The connection interface and the light outlet are disposed on the same side of the movable part, so that a photosensitive side of the image sensor is mechanically and electrically connected to the connection interface of the movable part in a flip-chip manner, thereby reducing a size of a camera module in a direction perpendicular to an optical axis direction of the image sensor, and further reducing a volume of the camera module to implement miniaturization. In addition, the image sensor driving assembly generates a driving force that actuates the movable part to drive the image sensor to move relative to the fixed base, so that optical image stabilization can be implemented. Therefore, a requirement for optical image stabilization can be met while the size of the camera module is reduced.

In addition, because the image sensor is directly connected to the circuit board, and does not need to be connected to the circuit board through a transition structure such as an organic substrate or a ceramic substrate, a quantity of parts and a quantity of assembling times of the camera module are reduced, and costs of the camera module can be reduced.

In a possible implementation, the movable part is of a multi-layer circuit board structure. In this way, the signal of the image sensor may be converted and sent to the processor of the electronic device.

In a possible implementation, the movable part and the flexible part are of an integrated structure. In this way, the movable part and the flexible part may be manufactured at the same time in an integrally molded manner, instead of being assembled in a manner of snap-fitting, welding, or the like. In addition, signal exchange and power-on are implemented by using a trace structure in the integrated structural formed by the movable part and the flexible part, so that signal quality can be ensured. Moreover, sizes of the flexible part and the movable part in the direction perpendicular to the optical axis direction of the image sensor may be further reduced, so that a structure of the circuit board is compact, and internal space of the image sensor driving apparatus can be saved.

In a possible implementation, the circuit board is of an integrated circuit board structure. The integrated circuit board structure indicates that the circuit board is manufactured in one piece by using a circuit board manufacturing process, instead of being formed by assembling a plurality of circuit boards or by combining the circuit board with another board material.

In this way, a size of the circuit board in the optical axis direction of the image sensor can be minimized by using the integrated circuit board structure, and signal exchange between the image sensor and the processor in the electronic device, power-on, and power-on of the image sensor driving assembly can be implemented by using the trace structure disposed in the circuit board. In addition, an electrical signal and an image signal are transmitted through a trace in the integrated circuit board structure, so that signal quality can be further ensured, a signal loss is reduced, external interference to a signal is also reduced, and imaging quality and imaging efficiency of the camera module are improved.

In a possible implementation, the image sensor driving apparatus further includes a reinforcing plate. The reinforcing plate is connected to the movable part, and a projection of the reinforcing plate in the optical axis direction of the image sensor does not overlap the light-transmitting through-hole. In this way, rigidity and/or flatness of the movable part can be improved, so that the photosensitive surface of the image sensor connected to the movable part is within a proper range, to ensure imaging quality of the camera module.

In a possible implementation, the reinforcing plate is disposed on a side that is of the movable part and that faces away from the connection interface; and in the optical axis direction of the image sensor, the reinforcing plate covers an overlapping area of the image sensor and the movable part. In this way, the reinforcing plate can improve flatness of an area that is on the movable part and that is mechanically and electrically connected to the image sensor.

In a possible implementation, the movable part is in contact with the fixed base. In this way, sizes of the circuit board and the fixed base in the optical axis direction of the image sensor can be reduced, thereby helping miniaturize the camera module.

In a possible implementation, the movable part is in rolling contact with the fixed base, so that resistance of moving the movable part relative to the fixed base can be reduced, thereby reducing power consumption of moving the movable part.

In a possible implementation, the image sensor driving apparatus further includes a movable support and a ball, the movable support is connected to the movable part, and the movable support is in rolling contact with the fixed base through the ball. In this way, rolling contact between the movable part and the fixed base can be implemented.

In a possible implementation, a contact position between the movable part and the fixed base is on a side that is of the movable part and that faces away from the image sensor. In this way, space of a side that is of the circuit board and that faces away from the image sensor is utilized to accommodate a structure in which the movable part is in contact with the fixed base, thereby avoiding an increase in a size of the image sensor driving apparatus in the optical axis direction of the image sensor, and helping miniaturize the image sensor driving apparatus.

In a possible implementation, the image sensor driving apparatus further includes a retention structure, and the retention structure is configured to keep the movable part in contact with the fixed base. In this way, it can be ensured that the movable part is in constant contact with the fixed base, it can be ensured that there is no displacement in the optical axis direction in a moving process of the image sensor, stability of the image sensor in the moving process is improved, a movement route of the image sensor can be limited to a stable plane, axial vibration or tilt generated in the moving process of the image sensor can be avoided, and quality and stability of image data in the moving process of the image sensor can be ensured. In addition, because the image sensor has no displacement in the optical axis direction, there is no need to dispose a sensor for detecting a position in the optical axis direction, which can save costs of the image sensor driving apparatus.

In a possible implementation, the fixed part and the flexible part form the retention structure. Because the flexible part has elasticity, an elastic force of the flexible part acts on the movable part to form a retention force, and the retention force can ensure that the movable part is in constant contact with the fixed base. At the same time, the elastic force of the movable part is used as a retention force, and no other retention structure needs to be added, so that a function of increasing the retention force can be implemented on a premise of ensuring that the movable part moves relative to the fixed part, thereby facilitating size miniaturization of the image sensor driving apparatus.

In a possible implementation, the image sensor driving apparatus further includes a magnetic member and a magnetic attraction member, the magnetic member and the magnetic attraction member form a retention structure, one of the magnetic member and the magnetic attraction member is disposed on the movable part, and the other of the magnetic member and the magnetic attraction member is disposed on the fixed base. In this way, a magnetic attraction force between the magnetic member and the magnetic attraction member may be used as a retention force, so that the movable part keeps in constant contact with the fixed base.

In a possible implementation, the image sensor driving apparatus further includes the movable support, and the first movable member is secured to the movable part through the movable support; and when the image sensor driving assembly generates a driving force, the movable support drives the movable part to move relative to the fixed base. In this solution, the movable support is used to fix the first movable member onto the movable part, so that the image sensor driving assembly can drive, through the movable support, the movable part and the image sensor to move simultaneously relative to the fixed base. In addition, the movable support may be further used to improve the rigidity and/or the flatness of the movable part, so that a function of reinforcing the flatness and/or the rigidity of the movable part is implemented.

In a possible implementation, the movable support and the movable part are of an integrated structure. In this way, the circuit board and the movable part may be manufactured in an integrally molded manner, so that sizes of the movable part and the movable support in the optical axis direction of the image sensor can be reduced, and the image sensor driving apparatus is more compact.

In a possible implementation, the movable support is further configured to be in contact with the fixed base, so that the fixed base is in contact with the movable part. In this way, indirect contact between the movable part and the fixed base can be implemented, which helps reduce difficulty of contact between the movable part and the fixed base.

In a possible implementation, the fixed base includes a fixed platform and a fixed frame, the fixed frame is connected to an edge of the fixed platform and encloses accommodating space with an opening, the opening is configured to allow incident light to enter the accommodating space, the accommodating space is used to accommodate the image sensor driving assembly, the movable part, and the image sensor, and the fixed platform and the image sensor are spaced apart in the optical axis direction of the image sensor. In this way, the image sensor in the moving process is not in contact with the fixed platform, and damage to the image sensor can be avoided.

In a possible implementation, the image sensor driving apparatus further includes an optical element. The optical element is disposed inside the fixed base and is connected to the side that is of the movable part and that faces away from the image sensor, and the optical element covers the light inlet. The optical element is connected to the movable part, or the optical element is configured to connect to the reinforcing plate. In this way, the optical element is integrated inside the image sensor driving apparatus, so that utilization of internal space of the fixed base can be improved, and miniaturization of the camera module is facilitated.

In a possible implementation, the optical element is an optical filter.

A second aspect of this application provides an optical apparatus, including an image sensor and the image sensor driving apparatus according to any one of the first aspect, where a photosensitive surface of the image sensor covers the light outlet, and the image sensor is mechanically and electrically connected to the connection interface of the movable part.

In a possible implementation, the optical apparatus further includes a fan-out base, and the image sensor is mechanically and electrically connected to the connection interface of the movable part through the fan-out base. In this way, the image sensor in a conventional technology is re-wired by using a fan-out technology, and then is mechanically and electrically connected to the movable part through the fan-out base, so that a connection area of the image sensor and the movable part can be increased, thereby helping reduce difficulty in connecting the movable part and the image sensor.

In a possible implementation, the optical apparatus further includes a lens driving apparatus, the lens driving apparatus is configured to drive a lens assembly to move in an optical axis direction of the image sensor, and the image sensor driving apparatus is configured to drive the image sensor to move on a plane perpendicular to the optical axis direction of the image sensor. The lens driving apparatus is disposed outside the fixed base and is connected to the fixed base, or the lens driving apparatus is disposed inside the fixed base.

When the lens driving apparatus is disposed outside the fixed base, the lens driving apparatus and the image sensor driving apparatus are two module structures that are independent of each other, and the image sensor driving apparatus can work with different types of lens driving apparatuses to form different driving solutions.

When the lens driving apparatus is disposed inside the fixed base, a quantity of parts of the optical apparatus can be reduced, compactness of the optical apparatus can be improved, and miniaturization of the optical apparatus is facilitated.

In a possible implementation, the optical apparatus further includes a second movable member, the second movable member is disposed inside the fixed base, and the second movable member and the stationary member form the lens driving apparatus disposed inside the fixed base. In this way, a quantity of parts of the optical apparatus can be reduced, so that the camera module is more compact, and costs are reduced.

A third aspect of this application provides an optical apparatus, including a lens driving apparatus and the image sensor driving apparatus according to any one of the first aspect, where the lens driving apparatus is disposed outside the fixed base of the image sensor driving apparatus and is connected to the fixed base, the lens driving apparatus is configured to drive a lens assembly to move in an optical axis direction of an image sensor, and the image sensor driving apparatus is configured to drive the image sensor to move on a plane perpendicular to the optical axis direction of the image sensor.

A fourth aspect of this application provides a camera module, including a lens driving apparatus, a lens assembly, an image sensor, and the image sensor driving apparatus according to any one of the first aspect. The image sensor is disposed inside the image sensor driving apparatus and is mechanically and electrically connected to the connection interface of the movable part of the image sensor driving apparatus, and a photosensitive surface of the image sensor covers the light outlet of the movable part. A light exit end of the lens assembly faces the light inlet of the movable part. The lens driving apparatus is configured to drive the lens assembly to move in an optical axis direction of the image sensor. The image sensor driving apparatus is configured to drive the image sensor to move on a plane perpendicular to the optical axis direction of the image sensor.

A fifth aspect of this application provides an electronic device, including a mainboard and the camera module according to the fourth aspect, where the camera module is electrically connected to the mainboard.

### BRIEF DESCRIPTION OF DRAWINGS

FIG. 1 is a cross-sectional view of a camera module in a related technology;
FIG. 2 is a diagram of a structure of an electronic device in a first view according to an embodiment of this application;
FIG. 3 is a diagram of a structure of the electronic device in FIG. 2 in a second view;
FIG. 4 is a diagram of a three-dimensional structure of a first camera module according to an embodiment of this application;
FIG. 5 is an exploded diagram of the camera module in FIG. 4 in a first view;
FIG. 6 is an exploded diagram of the camera module in FIG. 4 in a second view;
FIG. 7A is a cross-sectional view of the camera module in FIG. 4;
FIG. 7B is a diagram of an architecture of the camera module in FIG. 4;
FIG. 8 is a diagram of a three-dimensional structure of the camera module in FIG. 4 without a lens driving apparatus;
FIG. 9 is an exploded diagram of the camera module in FIG. 4 in a first view when a lens driving apparatus is removed;
FIG. 10 is a first cross-sectional view of the camera module in FIG. 4 without a lens driving apparatus;
FIG. 11 is a diagram of a three-dimensional structure of a circuit board in FIG. 10;
FIG. 12 is an exploded diagram of the camera module in FIG. 4 in a second view when a lens driving apparatus is removed;
FIG. 13 is an assembling diagram of the camera module in FIG. 4 without a lens driving apparatus;
FIG. 14 is a cross-sectional view of a camera module of a second architecture according to an embodiment of this application;
FIG. 15 is a cross-sectional view of a camera module of a third architecture according to an embodiment of this application; and
FIG. 16 is a cross-sectional view of a camera module of a fourth architecture according to an embodiment of this application.

Reference numerals:
100: image sensor driving apparatus;
110: fixed base;
   111: fixed platform; 1111: inner platform; 1112: outer platform;
   112: fixed frame; 1121: side frame; 1122: top plate;
   113: accommodating space; 114: opening;
120: circuit board;
   121: fixed part;
   122: flexible part; 1221: annular main body; 1222: first branch; 1223: second branch;
   123: movable part;
   124: light-transmitting through-hole; 1241: light inlet; 1242: light outlet;
   125: connection interface;
130: image sensor driving assembly; 131: stationary member; 132: first movable member;
140: reinforcing plate; 141: light-inlet through-hole;
150: movable support; 160: ball; 170: optical element; 180: stop structure;
200: image sensor;
300: lens driving apparatus; 310: second movable member; 320: fixed member; 330: cover; 340: lens driving assembly;
400: lens assembly; 500: bonding member;
1: electronic device; 2: optical apparatus; 3: camera module; 4: fan-out base;
101: housing; 1011: frame; 1012: rear cover; 1013: rear camera hole; 1014: flash hole;
102: display; 1021: front camera hole;
103: front-facing camera assembly; 104: rear-facing camera assembly; 1041: flash module;
105: mainboard; 106: processor; 107: memory; 108: battery.

### DESCRIPTION OF EMBODIMENTS

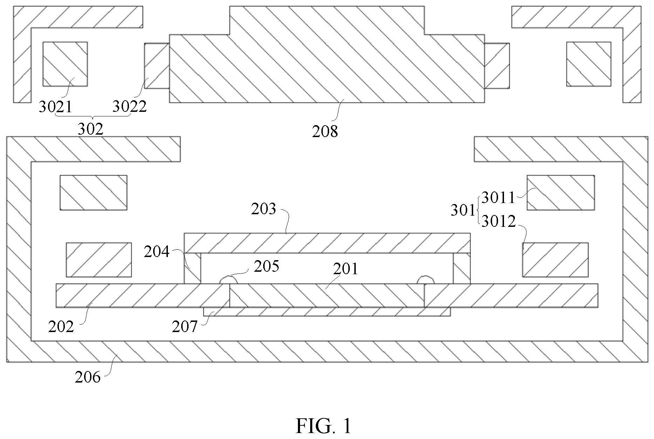

FIG. 1 is a cross-sectional view of a camera module in a related technology. In the related technology, as shown in FIG. 1, the camera module includes an image sensor 201, a substrate 202, an optical filter 203, a support base 204, a lead 205, a housing 206, a reinforcing plate 207, a lens 208, a first driving unit 301, and a second driving unit 302. The substrate 202 is provided with an accommodation opening, and the image sensor 201 is mounted inside the accommodation opening and is electrically connected to a top surface of the substrate 202 through the lead 205. The optical filter 203 is mounted on the top surface of the substrate 202 through the support base 204, and the optical filter 203 covers a light incident surface of the image sensor 201. The reinforcing plate 207 is connected to a bottom surface of the substrate 202. The first driving unit 301 includes a first fixed member 3011 and a first movable member 3012. The first fixed member 3011 interacts with the first movable member 3012 to generate a first driving force. The first driving force is used to drive the substrate 202 to move in a direction perpendicular to an optical axis direction of the lens 208, to implement an optical image stabilization (optical image stabilization, OIS for short) function. The second driving unit 302 includes a second fixed member 3021 and a second movable member 3022. The second fixed member 3021 interacts with the second movable member 3022 to generate a second driving force. The second driving force is used to drive the lens 208 to move in the optical axis direction of the lens 208, to implement an auto focus (automatic focus, AF for short) function.

However, as a user's requirement for image quality increases and the large-sized image sensor 201 is used to meet the user's requirement, a size and a weight of the camera module are increasingly large. As a result, the camera module occupies more space in an electronic device, which increases difficulty in making the electronic device lighter, thinner, and miniaturized. In addition, both a size required by the lead 205 and a thickness of the support base 204 limit miniaturization of the camera module, which increases difficulty in miniaturizing the camera module. Moreover, the substrate 202 carries a large quantity of parts, resulting in high-power consumption required for moving the substrate 202, which deteriorates optical image stabilization performance.

In view of this, embodiments of this application provide an image sensor driving apparatus, an optical apparatus, a camera module, and an electronic device, to reduce a volume of the camera module, reduce space required for disposing the camera module, and reduce difficulty in making the electronic device lighter, thinner, and miniaturized. In addition, optical image stabilization performance can be further improved, and power consumption can be reduced.

The electronic device may be an electronic product, for example, a mobile phone, a tablet, a notebook computer, a television, a vehicle-mounted device, a wearable device, or a video surveillance device. The wearable device may be a smart band, a smart watch, a wireless earphone, augmented reality (augmented reality, AR) glasses, an augmented reality helmet, virtual reality (virtual reality, VR) glasses, a virtual reality helmet, or the like. In embodiments of this application, descriptions are provided by using an example in which the electronic device is a mobile phone.

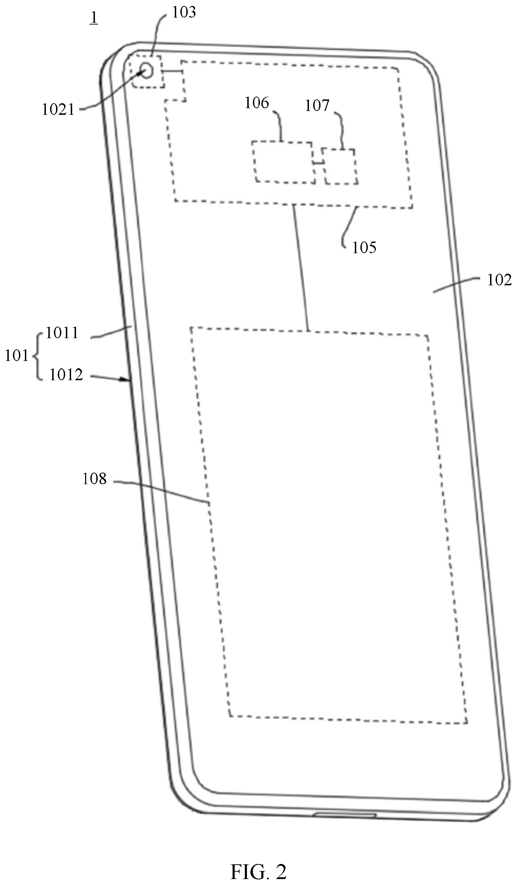

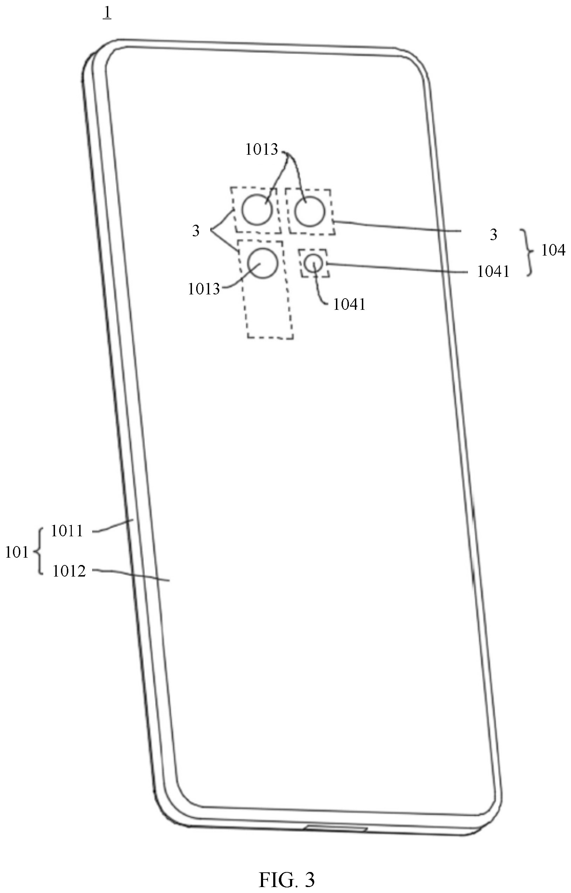

FIG. 2 is a diagram of a structure of an electronic device in a first view according to an embodiment of this application. FIG. 3 is a diagram of a structure of the electronic device in FIG. 2 in a second view.

With reference to FIG. 2 and FIG. 3, the electronic device 1 includes a housing 101, a display 102, a front-facing camera assembly 103, a rear-facing camera assembly 104, a mainboard 105, a processor 106, a memory 107, and a battery 108. The display 102 is configured to display an image, and the display 102 may further integrate a touch function. The display 102 is mounted on the housing 101. The housing 101 may include a frame 1011 and a rear cover 1012. The display 102 and the rear cover 1012 are respectively mounted on opposite sides of the frame 1011. In some implementations, in external space of the electronic device 1, space facing the display 102 is defined as a front of the electronic device 1, and space facing the rear cover 1012 is defined as a rear of the electronic device 1.

In some implementations, the front-facing camera assembly 103 is disposed on an inner side of the housing 101 and below the display 102. As shown in FIG. 2, the display 102 is provided with a front camera hole 1021, and the front-facing camera assembly 103 captures light in the front of the electronic device 1 through the front camera hole 1021, to implement photographing. The front-facing camera assembly 103 may include a camera module 3 described in the following possible implementations, or may include a camera module 3 of another structure.

In some implementations, as shown in FIG. 3, the rear cover 1012 is provided with at least one rear camera hole 1013. The rear-facing camera assembly 104 is disposed on the inner side of the housing 101. The rear-facing camera assembly 104 captures light from the rear of the electronic device 1 through the at least one rear camera hole 1013, to implement photographing. In embodiments of this application, "at least one" includes two cases: "one" and "a plurality of", where "the plurality of" means two or more, and "more" includes "two" itself. The rear-facing camera assembly 104 includes at least one camera module 3, for example, may include one or more of a standard camera module, a telephoto camera module, a wide-angle camera module, an ultra-telephoto camera module, or an ultra-wide-angle camera module. For example, the rear-facing camera assembly 104 includes a standard camera, a wide-angle camera, and a periscope telephoto camera. The camera module 3 of the rear-facing camera assembly 104 may include the camera module 3 described in the following possible implementations, or may include the camera module 3 of the another structure.

In some implementations, as shown in FIG. 3, the rear-facing camera assembly 104 may further include a flash module 1041. The rear cover 1012 is provided with a flash hole 1014, and the flash module 1041 is disposed on the inner side of the housing 101, and emits light through the flash hole 1014.

In some implementations, as shown in FIG. 2, the mainboard 105 is disposed on the inner side of the housing 101, and the processor 106 and the memory 107 are secured on the mainboard 105. The display 102, the front-facing camera assembly 103, and the rear-facing camera assembly 104 are coupled to the processor 106. The memory 107 is configured to store computer program code. The computer program code includes computer instructions. The processor 106 is configured to invoke the computer instructions to enable the electronic device 1 to perform a corresponding operation, for example, enable the display 102 to display a target image, or enable the front-facing camera assembly 103 or the rear-facing camera assembly 104 to capture a target image.

In some implementations, the battery 108 is electrically connected to the mainboard 105, and is configured to supply power to the electronic device 1.

In some possible implementations, an embodiment of this application further provides a camera module 3. The camera module 3 may be the front-facing camera assembly 103 or the rear-facing camera assembly 104 in the implementations described in FIG. 2 and FIG. 3. The camera module 3 is electrically connected to the processor 106 in the electronic device 1. Specifically, the processor 106 is electrically connected to an image sensor 200 in the camera module 3, and may process an image signal output by the image sensor 200.

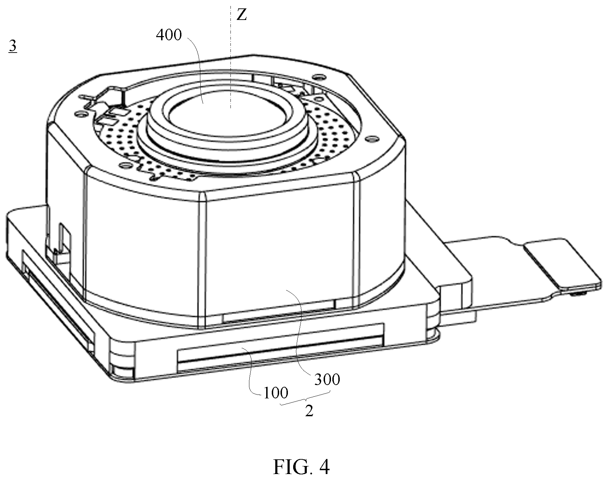

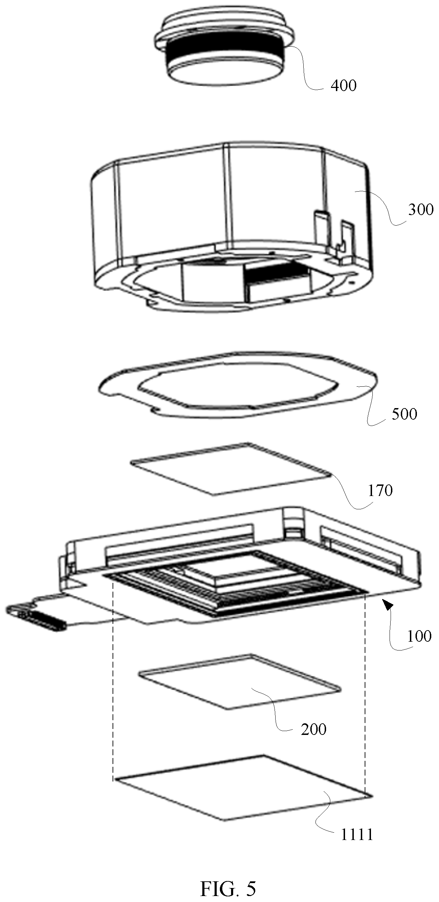

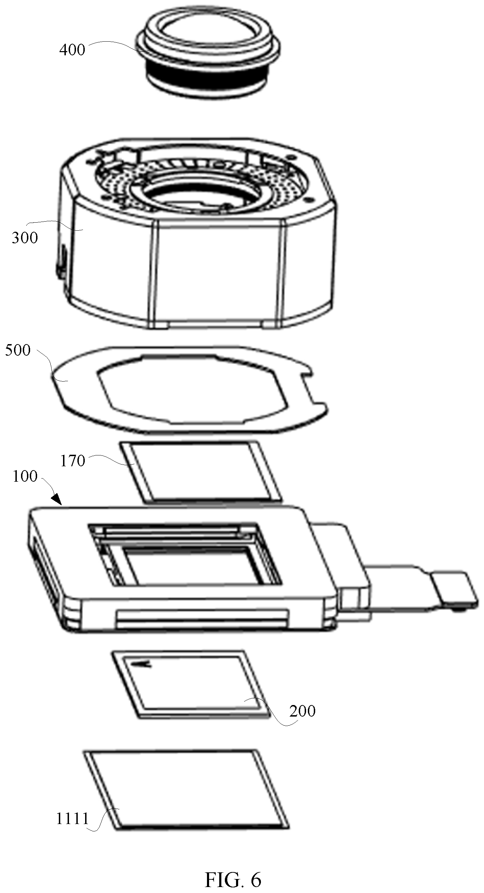

FIG. 4 is a diagram of a three-dimensional structure of a first camera module according to an embodiment of this application. FIG. 5 is an exploded diagram of the camera module in FIG. 4 in a first view. FIG. 6 is an exploded diagram of the camera module in FIG. 4 in a second view.

With reference to FIG. 4 to FIG. 6, the camera module 3 may include an image sensor driving apparatus 100, an image sensor 200, a lens driving apparatus 300, and a lens assembly 400. The image sensor driving apparatus 100 is configured to drive the image sensor 200 to move, to implement optical image stabilization. The lens driving apparatus 300 is configured to drive the lens assembly 400 to move, to implement optical focusing, optical image stabilization, aberration adjustment, and the like.

In some implementations, the image sensor 200 may move on a reference plane. The reference plane may be coplanar with or parallel to a photosensitive surface of the image sensor 200. The reference plane may be a plane perpendicular to an extension direction of an optical axis. The optical axis may be understood as an optical axis of the image sensor 200, or may be understood as an optical axis of the lens assembly 400, or may be understood as an optical axis of the camera module 3. In the camera module 3, theoretically, the optical axis of the lens assembly 400 and the optical axis of the image sensor 200 may coincide. In a case of an assembling error or a design tolerance, the optical axis of the lens assembly 400 and the optical axis of the image sensor 200 may alternatively be relatively offset or tilted. However, regardless of whether they coincide or are offset and tilted, extension directions of the optical axis of the lens assembly 400 and the optical axis of the image sensor 200 are consistent (where the consistent extension directions may be understood as basically the same directions, with a small range of a relative tilt allowed), and both the optical axis of the lens assembly 400 and the optical axis of the image sensor 200 may be considered as the optical axis of the camera module 3.

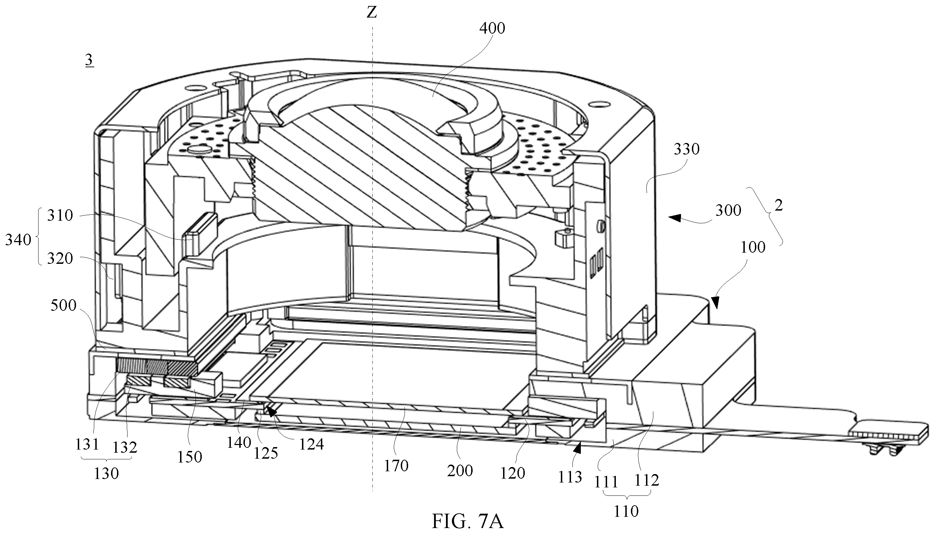

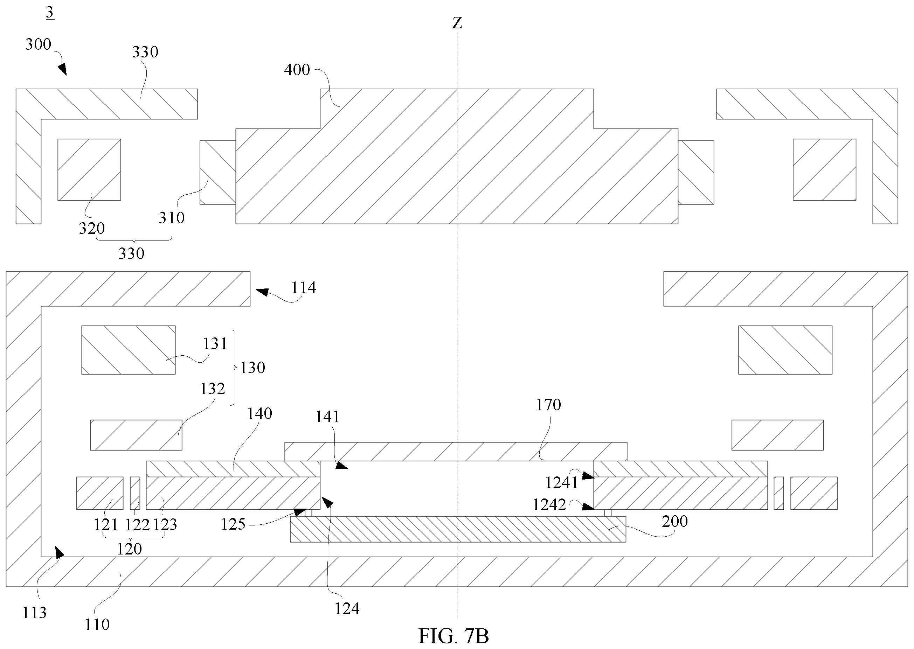

FIG. 7A is a cross-sectional view of the camera module in FIG. 4. FIG. 7B is a diagram of an architecture of the camera module in FIG. 4.

With reference to FIG. 7A, the image sensor driving apparatus 100 includes a fixed base 110, a circuit board 120, and an image sensor driving assembly 130. The fixed base 110 is configured to carry the circuit board 120 and a stationary member 131 of the image sensor driving assembly 130. The circuit board 120 is disposed on a photosensitive side of the image sensor 200 and is mechanically and electrically connected to the image sensor 200. The circuit board 120 is configured to electrically connect to the processor 106 on the mainboard 105 in the electronic device 1, to transmit a signal captured by the image sensor 200 to the processor 106. The image sensor driving assembly 130 is configured to drive the image sensor 200 to move, to implement optical image stabilization.

The mechanical connection indicates a connection relationship in a structural form, and may include a direct connection or an indirect connection. The direct connection may be an integrated architecture. For example, two portions of an integrated circuit board structure may be understood as a direct connection. The indirect connection indicates a connection performed through another connection structure, for example, connecting two board structures by using a solder ball. The electrical connection indicates a connection of signal traces. An image signal, an electrical signal, or another signal may be transmitted through an electrical connection relationship. For example, an electrical connection is performed through a trace in a circuit board, or an electrical connection is performed through a flexible circuit board (flexible printed circuit, FPC).

As shown in FIG. 7B, in an optical axis direction Z of the image sensor 200, the photosensitive surface of the image sensor 200 faces a back surface of the circuit board 120, a front surface of the circuit board 120 faces the lens assembly 400, and the front surface and the back surface of the circuit board 120 are disposed opposite to each other. It can be learned that the image sensor 200 is mechanically and electrically connected to the circuit board 120 in a flip-chip manner. In this case, in comparison with the conventional technology shown in FIG. 1, when a total length (total track length, TTL) of the lens assembly 400 remains unchanged, the reinforcing plate 207 below the image sensor 201 in FIG. 1 may be removed, so that a size of the camera module 3 in the optical axis direction Z of the image sensor 200 can be reduced, thereby helping miniaturize the camera module 3.

As shown in FIG. 7B, the image sensor 200 is mechanically and electrically connected to the circuit board 120 in the flip-chip manner, so that the image sensor 200 does not need to be electrically connected to the circuit board 120 through a lead in the conventional technology. In this way, a size of the circuit board 120 can be reduced in a direction perpendicular to the optical axis direction Z of the image sensor 200, and a size of the camera module 3 in a direction perpendicular to the optical axis direction Z of the image sensor 200 can be reduced, which helps miniaturize the camera module 3.

In addition, the image sensor 200 is electrically connected to the circuit board 120, so that the image sensor 200 does not need to be electrically connected to the circuit board 120 through a transition structure such as an organic substrate or a ceramic substrate in the conventional technology. This can reduce a quantity of parts of the camera module 3, reduce a quantity of assembling times of the camera module 3, and improve production efficiency of the camera module 3. Removing the costly transition structure such as the organic substrate or the ceramic substrate and directly electrically connecting the circuit board 120 to the image sensor 200 can help greatly reduce costs of the camera module 3.

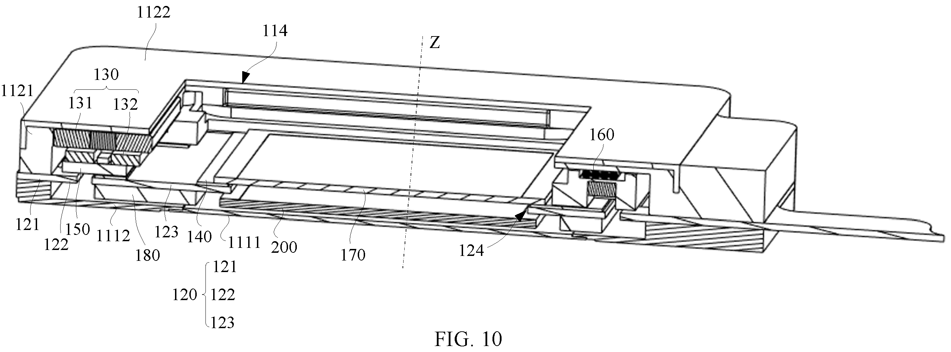

In embodiments of this application, the image sensor driving assembly 130, as a power source of the image sensor driving apparatus 100, is configured to generate a driving force, which can drive the image sensor 200 to move relative to the fixed base 110 through a movable part 123 of the circuit board 120. As shown in FIG. 7A, the image sensor driving assembly 130 includes the stationary member 131 and a first movable member 132 that can move relative to each other. The stationary member 131 is connected to the fixed base 110 (as shown in FIG. 10), the first movable member 132 is connected to the movable part 123 of the circuit board 120 through a movable support 150, and the first movable member 132 is configured to interact with the stationary member 131 to generate a driving force for driving the movable part 123 to move relative to the fixed base 110. In a process in which the image sensor driving assembly 130 generates the driving force, the movable part 123 drives the movable support 150 and the image sensor 200 to move together relative to the fixed base 110, to implement optical image stabilization.

As shown in FIG. 7A, the first movable member 132 is connected to the movable part 123 of the circuit board 120 through the movable support 150. However, in some implementations, the first movable member 132 may alternatively be directly connected to the movable part 213 of the circuit board 120. In other words, the first movable member 132 is connected to the movable part 123 not through the movable support 150. Therefore, the first movable member 132 may be directly or indirectly connected to the movable part 123 of the circuit board 120.

As shown in FIG. 7A, for the circuit board 120, in addition to being configured to carry the image sensor 200 and the movable support 150, in some implementations, the circuit board 120 may be further configured to carry another component, for example, may further carry an optical element 170 or an electronic component such as a resistor or a capacitor. The electronic component may be disposed on a side that is of the circuit board 120 and that faces away from the image sensor 200, or the electronic component may be disposed on a side that is of the circuit board 120 and that faces the image sensor 200.

In some implementations, the circuit board 120 may be further configured to electrically connect to the image sensor driving assembly 130, and is configured to control the image sensor driving assembly 130 to generate a driving force that drives the image sensor 200 to move. The circuit board 120 may be directly or indirectly electrically connected to the image sensor driving assembly 130.

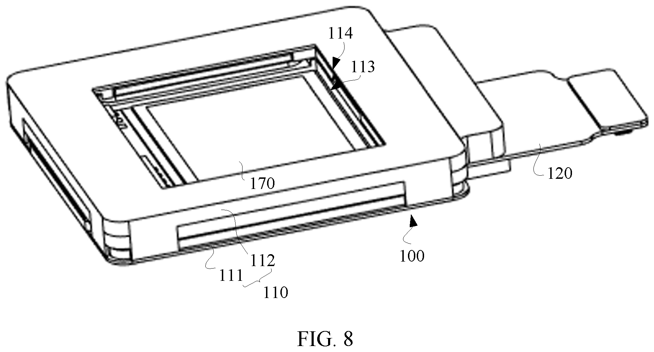

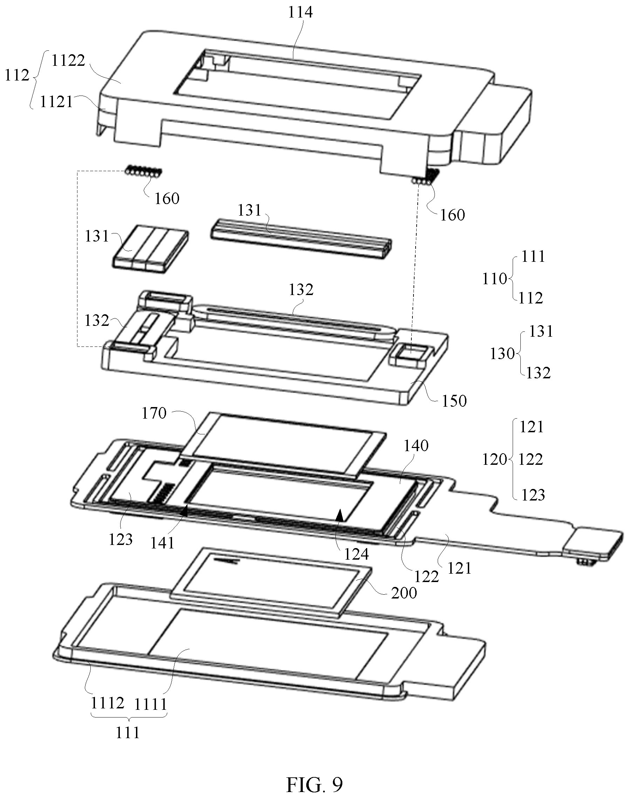

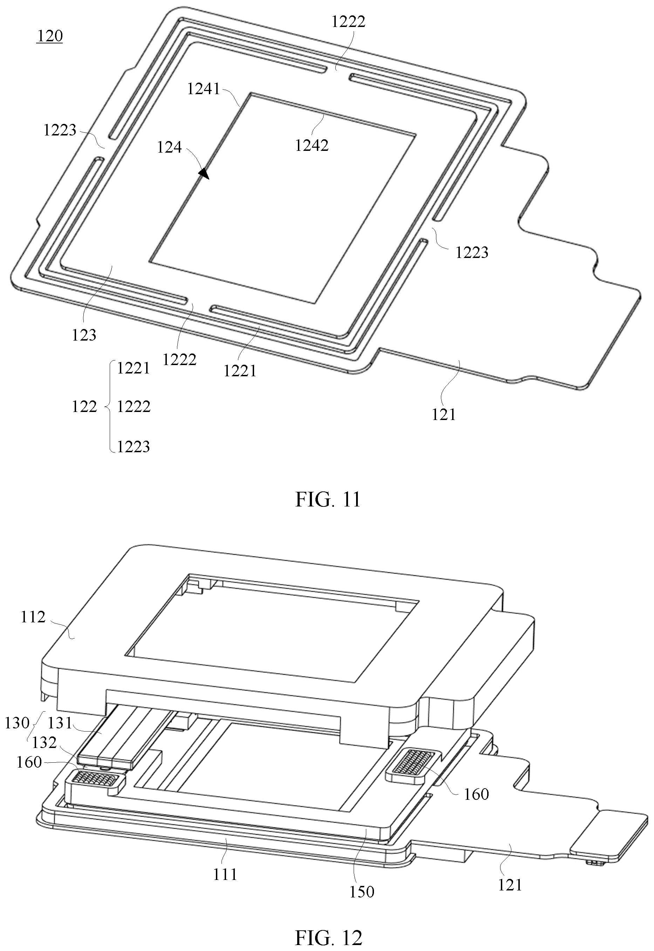

FIG. 8 is a diagram of a three-dimensional structure of the camera module in FIG. 4 without a lens driving apparatus. FIG. 9 is an exploded diagram of the camera module in FIG. 4 in a first view when a lens driving apparatus is removed. FIG. 10 is a first cross-sectional view of the camera module in FIG. 4 without a lens driving apparatus. FIG. 11 is a diagram of a three-dimensional structure of a circuit board in FIG. 10.

As shown in FIG. 11, the circuit board 120 includes a fixed part 121, a flexible part 122, and the movable part 123. The fixed part 121 is connected to the fixed base 110 (as shown in FIG. 10), and the fixed part 121 is mechanically and electrically connected to the movable part 123 through the flexible part 122. The movable part 123 is mechanically and electrically connected to the image sensor 200 (as shown in FIG. 7 or FIG. 10), to implement mechanical and electrical connections between the circuit board 120 and the image sensor 200. The movable part 123 is disposed on the photosensitive side of the image sensor 200 (as shown in FIG. 10), so that the image sensor 200 is mounted on the circuit board 120 in a flip-chip manner, thereby achieving an objective of reducing a volume of the camera module 3.

As shown in FIG. 10, after the first movable member 132 interacts with the stationary member 131 to generate the driving force, the first movable member 132 moves relative to the fixed base 110 under an action of the driving force and drives the movable part 123 to move relative to the fixed base 110, and then the movable part 123 drives the image sensor 200 to move relative to the fixed base 110. In this process, a position of the fixed part 121 remains unchanged, and the flexible part 122 undergoes elastic deformation, to ensure that the movable part 123 can move relative to the fixed part 121, thereby achieving an objective of moving the image sensor 200.

In embodiments of this application, as shown in FIG. 11, the movable part 123 is provided with a light-transmitting through-hole 124 that penetrates the movable part 123. One end of the light-transmitting through-hole 124 is a light inlet 1241 (as shown in FIG. 7B) configured to receive incident light passing through the lens assembly 400, and the other end of the light-transmitting through-hole 124 is a light outlet 1242 (as shown in FIG. 7B) configured to guide the incident light from an interior of the light-transmitting through-hole 124 to the photosensitive surface of the image sensor 200. The light inlet 1241 and the light outlet 1242 are disposed opposite to each other in an axial direction of the light-transmitting through-hole 124. In the axial direction of the light-transmitting through-hole 124, the photosensitive surface of the image sensor 200 covers the light outlet 1242 (as shown in FIG. 7A or FIG. 10). In this way, the photosensitive surface of the image sensor 200 may receive incident light passing through the light outlet 1242, to output an image signal.

In embodiments of this application, as shown in FIG. 7B, a connection interface 125 is disposed on the movable part 123, and the connection interface 125 is configured to be mechanically and electrically connected to the image sensor 200. In some implementations, the movable part 123 may alternatively be electrically connected to the image sensor 200 through the connection interface 125.

The connection interface 125 may be understood as a structure that is on the movable part 123 and that is configured to mechanically and electrically connect to the image sensor 200. A specific structure of the connection interface 125 is not limited herein. For example, when the image sensor 200 is not connected to the movable part 123, the connection interface 125 may be of an exposed metal structure.

How the connection interface 125 of the movable part 123 is mechanically and electrically connected to the image sensor 200 is not limited herein. In some possible implementations, the connection interface 125 may be mechanically and electrically connected to the image sensor 200 in a welding manner. Specifically, a solder ball is disposed between the connection interface 125 and the image sensor 200. In some other implementations, the connection interface 125 may alternatively be mechanically and electrically connected to the image sensor 200 in a conductive silver adhesive bonding manner. Specifically, conductive silver adhesive is disposed between the connection interface 125 and the image sensor 200, and is connected to both the connection interface 125 and the image sensor 200.

In some possible implementations, to further improve strength of the mechanical connection between the image sensor 200 and the movable part 123, the camera module 3 may further include an adhesive layer (not shown in the figure). The adhesive layer is disposed between the movable part 123 and the image sensor 200, and is bonded to both the movable part 123 and the image sensor 200.

In embodiments of this application, the movable part 123 is of a multi-layer circuit board structure, and can implement signal conversion, to send a signal generated by the image sensor 200 to the processor. In some implementations, the movable part 123 may be of a four-layer circuit board structure. In some other implementations, the movable part 123 may alternatively be of a six-layer circuit board structure. Certainly, the movable part 123 may alternatively be of any one of multi-layer circuit board structures with a quantity of layers greater than or less than four and six.

In some possible implementations, the movable part 123 and the flexible part 122 are of an integrated structure, and the movable part 123 and the flexible part 122 may be manufactured in an integrally molded manner. This helps reduce difficulty in connecting the movable part 123 and the flexible part 122. In addition, a trace that is electrically connected between the flexible part 122 and the movable part 123 may be disposed inside the movable part 123, without occupying a surface structure of the movable part 123.

In some possible implementations, the circuit board 120 is of an integrated circuit board structure. That is, the movable part 123, the flexible part 122, and the fixed part 121 are manufactured in an integrally molded manner. A periphery of the fixed part 121 is configured to electrically connect to the processor 106 in the electronic device 1. The circuit board 120 is manufactured by using an integrally molded process, which features a manufacturing process, convenient assembling, and better structural stability, thereby ensuring stability of signal transmission, and reducing a signal loss. In addition, the integrally molded circuit board 120 may save space of the image sensor driving apparatus 100 in a thickness direction, which facilitates a design of size miniaturization of the image sensor driving apparatus 100 in the optical axis direction Z of the image sensor 200.

As shown in FIG. 10, the fixed part 121 is partially disposed outside the fixed base 110, so that the fixed part 121 may be electrically connected to the processor 106 in the electronic device 1, to transmit a signal collected by the image sensor 200 to the processor 106. In some implementations, the fixed part 121 may alternatively be electrically connected to the processor 106 through a connecting member (not shown in the figure), and the connecting member is configured to electrically connect to the processor 106 in the electronic device 1, to transmit a signal of the image sensor 200 to the processor 106. For example, the connecting member may be a flexible circuit board.

How to connect the fixed part 121 to the fixed base 110 is not specifically limited herein. In some implementations, with reference to FIG. 7A and FIG. 10, it can be learned that the fixed base 110 includes a fixed platform 111 and a fixed frame 112, and the fixed part 121 may be connected between the fixed platform 111 and the fixed frame 112. Specifically, the fixed part 121 is disposed between an outer platform 1112 of the fixed platform 111 and a side frame 1121. In some implementations, the fixed part 121 may alternatively be connected to the fixed frame 112, and the fixed part 121 and the fixed platform 111 are spaced by at least a portion of the fixed frame 112.

In a process in which the image sensor driving assembly 130 drives the movable part 123 to move, the position of the fixed part 121 remains unchanged, and the flexible part 122 undergoes elastic deformation, to ensure that the first movable member 132 drives the movable part 123 to move relative to the fixed base 110. In terms of the mechanical connection, the flexible part 122 is equivalent to an elastic structure such as a spring or a leaf spring, to ensure that the movable part 123 can move relative to the fixed part 121. In addition, in terms of electrical connection, the flexible part 122 is equivalent to a trace structure for transmitting a signal and a current, to implement an electrical connection between the movable part 123 and the fixed part 121.

As shown in FIG. 11, the flexible part 122 is of an annular structure, the flexible part 122 is disposed in enclosed space formed by the movable part 123 and the fixed part 121, a first end and a second end that are opposite to each other in the flexible part 122 are respectively connected to the movable part 123, and a third end and a fourth end that are opposite to each other in the flexible part 122 are respectively connected to the fixed part 121.

A specific structure of the flexible part 122 is not limited herein. In some implementations, the flexible part 122 may include an annular main body 1221, two first branches 1222, and two second branches 1223. The two first branches 1222 are disposed on an inner side of the annular main body 1221 and are oppositely disposed, and the two first branches 1222 are separately connected to the movable part 123. The two second branches 1223 are disposed on an outer side of the annular main body 1221 and are oppositely disposed, and the two second branches 1223 are separately connected to the fixed part 121.

In some possible implementations, to implement mechanical and electrical connections between the fixed part 121 and the movable part 123, the flexible part 122 may include a conductor layer (not shown in the figure), an insulation layer (not shown in the figure), and a metal layer (not shown in the figure). The conductor layer is configured to dispose a trace, to implement the electrical connection between the movable part 123 and the fixed part 121. The metal layer may be of a metal flexural structure, and the metal layer is configured to provide elastic deformation of the flexible part 122. Presence of the metal layer ensures flexibility and strength of the flexible part 122, thereby improving an elastic deformation capability of the flexible part 122. The conductor layer and the metal layer may be isolated by the insulation layer, and the insulation layer may be specifically a polyamide insulating material.

The fixed base 110 may be used as a mounting carrier, and may also protect the image sensor driving assembly 130 and the circuit board 120. For example, as shown in FIG. 10, the image sensor driving assembly 130 and the movable part 123 of the circuit board 120 are disposed inside the fixed base 110, and cannot be seen because the image sensor driving assembly 130 and the movable part 123 of the circuit board 120 are blocked by the fixed base 110. In addition, the fixed base 110 may alternatively be used as a structure in which the image sensor driving apparatus 100 is connected to another apparatus. For example, the image sensor driving apparatus 100 may be connected to a middle frame of the electronic device 1 through the fixed base 110, to fix the image sensor driving apparatus 100.

With reference to FIG. 8 to FIG. 10, it can be learned that the fixed base 110 includes the fixed platform 111 and the fixed frame 112. As shown in FIG. 10, the fixed frame 112 is connected to an edge of the fixed platform 111, and the fixed frame 112 and the fixed platform 111 enclose accommodating space 113 with an opening 114. The opening 114 is configured to: allow the incident light passing through the lens assembly 400 to enter the accommodating space 113 and be collected by the image sensor 200, or may be further configured to mount or accommodate the optical element 170 (for example, an optical lens element). The accommodating space 113 is configured to accommodate the image sensor driving assembly 130, the image sensor 200, and at least a portion of the circuit board 120. For example, as shown in FIG. 7A, the image sensor 200, the image sensor driving assembly 130, and the movable part 123 of the circuit board 120 are disposed inside the accommodating space 113.

As shown in FIG. 10, the image sensor 200 is disposed inside the accommodating space 113, and the image sensor 200 is disposed between the circuit board 120 and the fixed platform 111. In an optical axis direction Z of the lens assembly 400, the image sensor 200 and the fixed platform 111 are spaced apart, so that the image sensor 200 is not in contact with the fixed platform 111 and is not damaged in a process in which the image sensor 200 moves relative to the fixed base 110.

As shown in FIG. 9, the fixed frame 112 may include the side frame 1121 and a top plate 1122. The top plate 1122 and the fixed platform 111 are disposed opposite to each other and are enclosed to form the opening 114. As shown in FIG. 8, the side frame 1121 is connected between the top plate 1122 and the fixed platform 111, and the side frame 1121, the top plate 1122, and the fixed platform 111 jointly form the accommodating space 113.

In some implementations, the fixed frame 112 may be of an integrally molded structure. For example, the top plate 1122 and the side frame 1121 may be made into an integrated structure by using a two-shot injection molding process.

As shown in FIG. 9, the fixed platform 111 includes an inner platform 1111 and the outer platform 1112. The outer platform 1112 is provided with a mounting opening, the mounting opening communicates with an interior and an exterior of the fixed base 110, and the image sensor 200 may be flip-chip mounted onto the circuit board 120 through the mounting opening (for example, A in the figure). The inner platform 1111 and the outer platform 1112 are secured and seal the mounting opening. The fixed frame 112 is connected to an edge of the outer platform 1112.

The mounting opening may be a circular through-hole, a square through-hole, or the like. In addition, a size of the mounting opening is greater than a size of the image sensor 200. It is ensured that the image sensor 200 is disposed inside the fixed base 110 through the mounting opening to implement the mechanical and electrical connections between the image sensor 200 and the connection interface 125. In addition, operation space for implementing a mechanical connection and/or an electrical connection with the image sensor 200 is provided. For example, when the image sensor 200 is mechanically and electrically connected to the circuit board 120 in a welding manner, welding space is provided for a welding operation.

A specific material that forms the fixed platform 111 is not specifically limited herein. In some implementations, the fixed platform 111 may be made of a metal material. In some other implementations, the fixed platform 111 may alternatively be made of a non-metal material.

In some possible implementations, the fixed base 110 is in contact with the movable part 123, so that movement stability of the image sensor 200 can be improved, and a movement route of the image sensor 200 is limited to a fixed (stable) plane (for example, a plane perpendicular to the optical axis direction Z of the image sensor 200), to avoid vibration or tilt of the image sensor 200 in the optical axis direction Z of the image sensor 200 in a movement process. In addition, when a contact interface between the movable part 123 and the fixed base 110 is perpendicular to the optical axis direction Z of the image sensor 200, a distance between the movable part 123 and the fixed base 110 in the optical axis direction Z of the image sensor 200 may be further reduced, which helps miniaturize the camera module 3.

As shown in FIG. 10, a contact position between the movable part 123 and the fixed base 110 may be on a side that is of the movable part 123 and that faces away from the image sensor 200. In some other implementations, the contact position between the movable part 123 and the fixed base 110 may alternatively be on a side that is of the movable part 123 and that faces the fixed platform 111 of the fixed base 110.

FIG. 12 is an exploded diagram of the camera module in FIG. 4 in a second view when a lens driving apparatus is removed.

The movable part 123 may be in direct contact or indirect contact with the fixed base 110, which is not specifically limited herein. In some implementations, the movable part 123 may be in contact with the fixed base 110 through an intermediate member. For example, as shown in FIG. 12, the intermediate member includes a movable support 150 and balls 160. The movable part 123 may be in contact with the fixed frame 112 of the fixed base 110 through the movable support 150 and the balls 160. In some other implementations, the intermediate member alternatively includes the movable support 150. The movable support 150 is connected to the movable part 123, and the movable support 150 is in contact with the fixed base 110, so that the fixed base 110 is in contact with the movable part 123 through the movable support 150. In some other implementations, the movable part 123 may alternatively be in direct contact with the fixed base 110. For example, the movable part 123 may be in contact with the fixed platform 111 of the fixed base 110.

The movable part 123 may be in sliding contact or rolling contact with the fixed base 110, which is not specifically limited herein. When the movable part 123 and the fixed base 110 are in indirect contact with the fixed base 110 through an intermediate member (not shown in the figure), the intermediate member (not shown in the figure) is in indirect sliding contact or rolling contact with the fixed base 110. For example, as shown in FIG. 10, the movable part 123 may be in indirect rolling contact with the fixed base 110 through the movable support 150.

It should be noted that, when there are a plurality of contact positions between the movable part 123 and the fixed base 110, contact forms of the plurality of contact positions between the movable part 123 and the fixed base 110 may all be sliding contact or rolling contact, or some of the contact forms may be sliding contact and the others may be rolling contact.

How the movable support 150 is in rolling contact with the fixed base 110 is not specifically limited herein. In some implementations, as shown in FIG. 12, the image sensor driving apparatus 100 may further include the balls 160. The balls 160 are disposed between the movable support 150 and the fixed frame 112 of the fixed base 110 (as shown in FIG. 10). The movable support 150 is in rolling contact with the fixed frame 112 through the balls 160, so that the movable part 123 is in rolling contact with the fixed frame 112. In some other implementations, the image sensor driving apparatus 100 may alternatively include a roller, and the movable support 150 may alternatively be in rolling contact with the fixed frame 112 through the roller.

As shown in FIG. 12, the movable support 150 is provided with a rolling groove for accommodating the balls 160, and a diameter of each ball is greater than a depth of the rolling groove, to ensure that the balls protrude from the rolling groove and are in rolling contact with the fixed frame 112. As shown in FIG. 10, there are three rolling grooves, and the three rolling grooves are distributed in a triangle, which helps further improve stability of contact between the movable support 150 and the fixed frame 112. Certainly, a quantity of rolling grooves may alternatively be greater than or less than three.

As shown in FIG. 12, a plurality of balls arranged in an array are disposed in the rolling groove. In some embodiments, one ball may alternatively be disposed in the rolling groove.

In some other possible implementations, when the movable part 123 is in sliding contact with the fixed base 110, contact between the movable part 123 and the fixed base 110 may include but is not limited to the following several manners: In a first manner, contact between the fixed base 110 and the movable part 123 is contact between planes. In a second manner, contact between the fixed base 110 and the movable part 123 is contact between a plane and an array of protrusions. At a contact position between the fixed part 121 and the movable part 123, a structural form of one of the fixed base 110 and the movable part 123 is a complete planar structure, and a structural form of the other of the fixed base 110 and the movable part 123 is a structure of an array of protrusions. In a third manner, contact between the fixed base 110 and the movable part 123 is contact between a plane and a plurality of protrusions. At a contact position between the fixed part 121 and the movable part 123, a structural form of one of the fixed base 110 and the movable part 123 is a complete planar structure, and a structural form of the other of the fixed base 110 and the movable part 123 is a structure of a plurality of protrusions. In a fourth manner, contact between the fixed base 110 and the movable part 123 is contact between a plane and a protruding rib structure. At a contact position between the fixed part 121 and the movable part 123, a structural form of one of the fixed base 110 and the movable part 123 is a complete planar structure, and a structural form of the other of the fixed base 110 and the movable part 123 is a protruding rib structure. In a fifth manner, contact between the fixed base 110 and the movable part 123 is contact between protruding rib structures. At a contact position between the fixed part 121 and the movable part 123, a structural form of one of the fixed base 110 and the movable part 123 is a protruding rib structure, and a structural form of the other of the fixed base 110 and the movable part 123 is also a protruding rib structure.

When the movable part 123 is in contact with the fixed base 110, a friction interface is formed at a contact position between the movable part 123 and the fixed base 110, and a friction coefficient of the friction interface is less than 0.3. The friction interface may be a contact surface between the movable part 123 and the fixed base 110 (that is, the friction interface is in a form of a surface). The friction interface may alternatively be a medium between the movable part 123 and the fixed base 110, for example, lubricating oil (that is, the friction interface is in a form of a grease or a paste). The friction interface may alternatively be of a layer structure between the movable part 123 and the fixed base 110. For example, the friction interface is formed between the movable part 123 and the fixed base 110 by disposing a super-lubricating material layer (that is, the friction interface is in a form of a three-dimensional layer structure). In summary, a low friction coefficient of sliding friction may be obtained at the friction interface by disposing a solid-state structural layer or a grease- or paste-like lubricating layer, or in a surface treatment manner. In this application, the friction coefficient between the movable part 123 and the fixed base 110 is limited, so that on a basis of limiting a movement plane of the image sensor 200, smooth movement of the image sensor 200 can be ensured, frictional resistance in a movement process of the image sensor 200 can be reduced, and efficiency of driving the image sensor 200 to move can be improved.

It should be noted that, when the movable part 123 is in indirect contact with the fixed base 110 through the intermediate member (not shown in the figure), a friction interface is formed at a contact position between the fixed base 110 and the intermediate member (not shown in the figure), and a friction coefficient of the friction interface is less than 0.3.

In some possible implementations, at a position of the friction interface, at least one of the movable part 123 and the fixed base 110 includes a super-lubricating material layer (not shown in the figure), the super-lubricating material layer is of a solid-state structure, and a friction coefficient of a friction interface formed by using the super-lubricating material layer is less than 0.3. In some implementations, a super-lubricating material layer (not shown in the figure) is disposed on a surface of the movable part 123. In some other implementations, a super-lubricating material layer (not shown in the figure) is disposed on a surface of the fixed base 110. In still some other implementations, super-lubricating material layers (not shown in the figure) are disposed on both a surface of the movable part 123 and a surface of the fixed base 110. The super-lubricating material layer of the solid-state structure is easier to bond with the movable part 123 and the fixed base 110. For example, connecting and fixed may be directly performed by using an adhesive layer, and an assembling process is simple and easy to implement.

In some possible implementations, no super-lubricating material layer or lubricating oil may be disposed between the movable part 123 and the fixed base 110. The friction coefficient of the friction interface is less than 0.3 by applying a surface treatment manufacturing process to the contact surface between the movable part 123 and the fixed base 110. A surface treatment manner may be a surface modification technology such as polishing, a surface alloying technology such as carburizing and nitriding, a surface conversion coating technology (where a chemical method is used to enable chemical reaction between an added material and a substrate material, to form a conversion coating), or the like. The friction interface is formed in the surface treatment manner, so that a relatively small size in the optical axis direction Z may be obtained without adding a super-lubricating material layer or a lubricating layer.

In another implementation, the solid-state super-lubricating material layer and the grease- or paste-like lubricating oil may be used in combination in a same implementation, or the solid-state super-lubricating material layer and the surface obtained by applying the surface treatment manufacturing process are used in a same implementation, or the grease- or paste-like lubricating oil and the surface obtained by applying the surface treatment manufacturing process are used in a same implementation.

In some possible implementations, the image sensor driving apparatus 100 further includes a retention structure (not shown in the figure). The retention structure is configured to generate a retention force. The retention force enables the movable part 123 to keep in constant contact with the fixed base 110, so that movement stability of the image sensor 200 can be improved, and a movement route of the image sensor 200 is limited to a fixed (stable) plane (for example, a plane perpendicular to the optical axis direction Z of the image sensor 200), thereby ensuring quality and stability of image data obtained by the image sensor 200.

Specifically, the movable part 123 is in contact with the fixed base 110, and the movable part 123 further has a retention force. The retention force is used to maintain a state of contact between the movable part 123 and the fixed base 110, and a direction of the retention force is a direction toward the contact surface between the movable part 123 and the fixed base 110. In this way, the image sensor driving apparatus 100, regardless of a position or an environment, allows the retention force to consistently abut against the movable part 123 to be in contact with the fixed base 110. The retention force needs to be greater than a sum of gravity of the movable part 123 and all structures borne on the movable part 123. In this way, no matter how the camera module 3 is disposed, the movable part 123 can move on the fixed plane in a process of driving the image sensor 200 to move, to implement movement stability of the image sensor 200, and avoid the image sensor 200 from tilting or undergoing axial movement. The axial movement indicates a direction of an optical axis, which may be understood as follows: A plane of the contact surface between the movable part 123 and the fixed base 110 is a plane perpendicular to the optical axis. The lens driving apparatus 300 provided in this application can drive the image sensor 200 to move on the plane perpendicular to the optical axis.

A specific structure of the retention structure is not limited herein. In some implementations, the retention structure may include the flexible part 122 and the fixed part 121, the flexible part 122 is connected to the movable part 123, and the fixed part 121 is secured to the fixed base 110. The flexible part 122 is of an elastic structure, and an elastic force of the flexible part 122 acts on the movable part 123 to form a retention force. In this way, the elastic force of the flexible part 122 is used as a retention force to ensure contact between the movable part 123 and the fixed base 110. The flexible part 122 not only can ensure that the movable part 123 moves under a driving force of the image sensor driving assembly 130, but also provides a function of the retention force. A design of the dual functions of the flexible part 122 facilitates size miniaturization of the image sensor driving apparatus 100.

In some other implementations, the image sensor driving apparatus 100 further includes a magnetic member (not shown in the figure) fixed on the movable part 123. A portion of the fixed base 110 and the magnetic member form a retention structure, and a retention force is formed based on a magnetic attraction force between the magnetic member and the fixed base 110.

A specific structure of the magnetic member is not limited herein. In some implementations, the magnetic member may include a plurality of magnets of a dot structure. In some other implementations, the magnetic member may alternatively include a plurality of magnetic strips of a strip structure.

In some other implementations, the retention structure may alternatively include a magnetic member (not shown in the figure) and a magnetic attraction member (not shown in the figure). The magnetic member is disposed in one of the movable part 123 and the fixed base 110, and the magnetic attraction member is disposed in the other of the movable part 123 and the fixed base 110. A retention force is formed based on a magnetic attraction force between the magnetic member and the magnetic attraction member.

In some other implementations, the image sensor driving apparatus 100 may further include an elastic member (not shown in the figure). The elastic member is disposed between the movable part 123 and the fixed platform 111 and is connected to both the movable part 123 and the fixed platform 111, or the elastic member may be disposed between the movable part 123 and the fixed frame 112 and is connected to both the movable part 123 and the fixed frame 112. The elastic member is configured to form at least a partial retention structure. In an assembled state, the elastic member is in an elastically compressed state, and the elastic member applies an elastic force to the movable part 123. The elastic force faces the contact surface between the movable part 123 and the fixed base 110, and the elastic force is at least a partial retention force that ensures contact between the movable part 123 and the fixed base 110.

In some implementations, the elastic member, the flexible part 122, and the fixed part 121 jointly form a retention structure, and the retention force provided by the flexible part 122 and the retention force provided by the elastic member can make contact between the movable part and the fixed base 110 more stable.

It should be noted that a specific structure of the retention structure may include but is not limited to the foregoing several types, and may also be another structure. In addition, there may be one or more retention structures. In addition, when there are a plurality of retention structures in the image sensor driving apparatus 100, at least one retention structure in the foregoing content may be present.

In some possible implementations, as shown in FIG. 10, in the optical axis direction Z of the image sensor 200, the image sensor driving assembly 130 is disposed on the side that is of the circuit board 120 and that faces away from the image sensor 200. In this case, the fixed member 320 is connected to the fixed frame 112, so that difficulty in disposing the image sensor driving assembly 130 in the fixed base 110 can be reduced. In addition, the image sensor driving assembly 130 may be disposed by utilizing space between the circuit board 120 and the fixed frame 112, so that a size of the image sensor driving apparatus 100 in a direction perpendicular to the optical axis direction Z of the image sensor 200 can be reduced, thereby helping miniaturize the camera module 3.

In some other possible implementations, the image sensor driving assembly 130 may alternatively be disposed on the side that is of the circuit board 120 and that faces the image sensor 200. In other words, the image sensor driving assembly 130 is disposed between the circuit board 120 and the fixed platform 111. In this case, the fixed member 320 is connected to the fixed platform 111. In still some other implementations, the first movable member 132 may alternatively be disposed on the side that is of the circuit board 120 and that faces away from the image sensor 200, and the fixed member 320 is disposed between the circuit board 120 and the fixed platform 111 and is connected to the fixed platform 111.

In some implementations, the image sensor driving assembly 130 may be a magnetic structure motor, for example, a VCM (voice coil motor, voice coil motor). In this case, one of the stationary member 131 and the movable member is a magnetic driving member, and the other of the stationary member 131 and the movable member is a coil driving member. For example, in the implementation shown in FIG. 9, the stationary member 131 is a magnetic driving member, and the movable member is a coil driving member. In another specific solution, the stationary member 131 is a coil driving member, and the movable member is a magnetic driving member. In another implementation, the image sensor driving assembly 130 may alternatively be a driver of another type, for example, an SMA (shape memory alloy, shape memory alloy) motor or a PIEZO (piezo motor, piezo motor).

The first movable member 132 and the stationary member 131 of the image sensor driving assembly 130 may be two elements (for example, a coil and a magnet in the magnetic structure motor) that are independent of each other; and in a power-on state, a driving force is generated to drive the image sensor 200 to move. Alternatively, the first movable member 132 and the stationary member 131 of the image sensor driving assembly 130 may be of an integrated structure, for example, a shape memory alloy motor, which may be driven by changing a size of a material through electrical heating.

In some possible implementations, as shown in FIG. 10, the image sensor driving apparatus 100 may further include a reinforcing plate 140. The reinforcing plate 140 is connected to the movable part 123, and the reinforcing plate 140 is configured to increase flatness of at least a partial area of the movable part 123. For example, the reinforcing plate 140 is configured to increase flatness of a connection area of the movable part 123 and the image sensor 200. In addition, the reinforcing plate 140 may also be configured to improve rigidity of the at least a partial area of the movable part 123.

For example, as shown in FIG. 10, in the optical axis direction Z of the image sensor 200, the reinforcing plate 140 is disposed on the side that is of the movable part 123 and that faces away from the image sensor 200 and is connected to the movable part 123. In other words, the reinforcing plate 140 and the image sensor 200 are respectively disposed on two opposite sides of the movable part 123. In some implementations, in the optical axis direction Z of the image sensor 200, the reinforcing plate 140 may alternatively be disposed on a side that is of the movable part 123 and that faces the image sensor 200, and a projection of the image sensor 200 does not overlap a projection of the reinforcing plate 140. In other words, the reinforcing plate 140 and the image sensor 200 are disposed on a same side of the movable part 123 and are disposed on a same plane.

As shown in FIG. 7B, the reinforcing plate 140 covers an overlapping area of the image sensor 200 and the movable part 123 in the optical axis direction Z of the image sensor 200. In some implementations, the reinforcing plate 140 may further cover at least a partial area that is in the movable part 123 and that is outside the overlapping area with the image sensor 200.

As shown in FIG. 7B, the reinforcing plate 140 is provided with a light-inlet through-hole 141, and an inner diameter of the light-inlet through-hole 141 may be greater than or equal to an inner diameter of the light-transmitting through-hole 124. An axis of the light-inlet through-hole 141 coincides with an axis of the light-transmitting through-hole 124, or an axis of the light-inlet through-hole 141 may be parallel to an axis of the light-transmitting through-hole 124.

How to connect the reinforcing plate 140 to the movable part 123 is not limited herein. For example, the reinforcing plate 140 is connected to the movable part 123 in a bonding manner.

When the movable part 123 is configured to carry an electronic component, if the electronic component and the reinforcing plate 140 are disposed on a same side of the movable part 123, to implement connection between the movable part 123 and the electronic component, the reinforcing plate 140 needs to be provided with a through-hole or a notch configured to connect the electronic component and the movable part 123.

It should be noted that, in addition to improving the flatness and/or the rigidity of the movable part 123 by the reinforcing plate 140, in some possible implementations, the image sensor driving apparatus 100 may further include a rigid layer (not shown in the figure). The rigid layer is coated on a surface of the movable part 123, and is configured to increase the rigidity and/or the flatness of the movable part 123. A specific material of the rigid layer is not limited herein. For example, the rigid layer may be formed by high-strength glue coated on the movable part 123. In some other possible implementations, the flatness and/or the rigidity of the movable part 123 may also be improved in an injection molding reinforcement manner. In still other possible implementations, the flatness and/or the rigidity of the movable part 123 may be improved by a structural member. The structural member may include but is not limited to the movable support 150 configured to carry the first movable member 132.

It should be further noted that the flatness and/or rigidity of the movable part 123 may be improved by at least one of the rigid layer, the reinforcing plate 140, the injection molding reinforcement, the structural member, and the like. For example, the structural member and the reinforcing plate 140 are present at the same time.

In some possible implementations, as shown in FIG. 10, the image sensor driving apparatus 100 may further include the movable support 150. The movable support 150 is disposed on the side that is of the movable part 123 and that faces away from the image sensor 200, and is connected to the movable part 123. The movable support 150 is configured to carry the first movable member 132. In this case, the movable support 150 may be further configured to improve the flatness and/or the rigidity of the movable part 123.

As shown in FIG. 10, the reinforcing plate 140 is partially disposed between the movable support 150 and the movable part 123, and the reinforcing plate 140 is connected to both the movable support 150 and the movable part 123, so that the movable support 150 is connected to the movable part 123 through the reinforcing plate 140, and the first movable member 132 is connected to the movable part 123. In some implementations, the movable support 150 may alternatively be connected to the movable part 123 not through the reinforcing plate 140. In other words, the movable support 150 is directly connected to the movable part 123.

A specific structure of the movable support 150 is not limited herein. In the optical axis direction Z of the image sensor 200, a projection of the movable support 150 does not overlap the light-transmitting through-hole 124, to ensure that the light-transmitting through-hole 124 can receive incident light passing through the lens assembly 400. For example, as shown in FIG. 9, the movable support 150 is of an annular structure, and an inner diameter of the movable support 150 is greater than a size of the light-transmitting through-hole 124.

In some implementations, the movable support 150 and the movable part 123 are of a split structure, and the movable support 150 may be indirectly connected to the movable part 123, or the movable support 150 may be directly connected to the movable part 123 in a manner of bonding, welding, or the like. In some other implementations, the movable support 150 and the movable part 123 may alternatively be of an integrated structure. That is, the circuit board 120 and the movable support 150 are manufactured in an integrally molded manner.

In some implementations, the first movable member 132 may be mechanically and electrically connected to the movable part 123 through the movable support 150, so that the movable part 123 may send a signal to the first movable member 132 through the movable support 150, and the first movable member 132 interacts with the stationary member 131 to generate a driving force. In some other implementations, the first movable member 132 may alternatively be mechanically connected to the movable part 123 through the movable support 150.

In some possible implementations, as shown in FIG. 10, the image sensor driving apparatus 100 may further include the optical element 170. The optical element 170 is disposed inside the fixed base 110 and is on the side that is of the movable part 123 and that faces away from the image sensor 200. The optical element 170 is connected to the movable part 123 through the reinforcing plate 140. The optical element 170 covers the light-transmitting through-hole 124 in the optical axis direction Z of the image sensor 200. The light inlet 1241 is configured to receive incident light passing through the optical element 170. The optical element 170 is disposed inside the fixed base 110, so that compactness of the camera module 3 can be improved, thereby helping miniaturize the camera module 3.

In embodiments of this application, an example in which the optical element 170 is an optical filter is used for description. Certainly, the optical element 170 may alternatively be another element, for example, a lens element.

The optical element 170 may be connected to the reinforcing plate 140 in a bonding manner, so that the optical element 170 is indirectly connected to the movable part 123 through the reinforcing plate 140. However, in some implementations, the optical element 170 may alternatively be indirectly connected to the movable part 123 not through an indirect member such as the reinforcing plate 140. In this case, the optical element 170 is connected to the movable part 123.

As shown in FIG. 10, the optical element 170 is connected to the movable part 123 through the reinforcing plate 140, so that the support base 204 (as shown in FIG. 1) in the conventional technology can be removed, and the size of the camera module 3 in the direction perpendicular to the optical axis direction Z of the image sensor 200 is reduced, thereby helping miniaturize the camera module 3. In addition, with reference to a solution in which the image sensor 200 is flip-chip mounted on the movable part 123 of the circuit board 120, the size of the camera module 3 in the direction perpendicular to the optical axis direction Z of the image sensor 200 may be further reduced, thereby helping miniaturize the camera module 3.

In addition, the optical element 170 is mounted on the movable part 123 through the reinforcing plate 140, so that the reinforcing plate 207 (as shown in FIG. 1) and the support base 204 (as shown in FIG. 1) in the conventional technology may be removed. In addition, the image sensor 200 is connected to the movable part 123 in a flip-chip manner, so that a weight carried by the movable part 123 may be further reduced, and difficulty in moving the movable part 123 can be reduced, thereby improving image stabilization performance and reducing power consumption.

In some possible implementations, as shown in FIG. 10, the image sensor driving apparatus 100 may further include a stop structure 180. The stop structure 180 is disposed inside the fixed base 110. In the optical axis direction Z of the image sensor 200, a first end of the stop structure 180 is configured to abut against the circuit board 120, and a second end of the stop structure 180 is connected to the fixed base 110, to locate relative positions of the circuit board 120 and the fixed base 110 in the optical axis direction Z of the image sensor 200. Specifically, as shown in FIG. 10, the first end of the stop structure 180 may abut against the movable part 123 of the circuit board 120, and the second end of the stop structure 180 is connected to the outer platform 1112 of the fixed base 110.

To prevent the stop structure 180 from obstructing the connection between the image sensor 200 and the movable part 123, as shown in FIG. 10, in the optical axis direction Z of the image sensor 200, a projection of the stop structure 180 does not overlap the image sensor 200.

A specific structure of the stop structure 180 is not limited herein. In some implementations, the stop structure 180 may be of an annular integrated structure. In some other implementations, the stop structure 180 may alternatively include a plurality of stop parts spaced apart in a circumferential direction of the light-transmitting through-hole 124.

As shown in FIG. 7A, the image sensor 200 and the image sensor driving apparatus 100 are two structures that are independent of each other, and the image sensor driving apparatus 100 may be connected to different types of image sensors 200. In some implementations, the image sensor 200 may alternatively be fixed to the image sensor driving apparatus 100, so that the image sensor 200 and the image sensor driving apparatus 100 are connected as a whole to form an optical apparatus 2.

As shown in FIG. 7A and FIG. 7B, the image sensor driving apparatus 100 and the lens driving apparatus 300 are two modular structures that are independent of each other, and the image sensor driving apparatus 100 and the lens driving apparatus 300 may form the optical apparatus 2, as shown in FIG. 7A. In this case, the image sensor driving apparatus 100 and different types of lens driving apparatuses 300 may form different driving solutions. The image sensor driving apparatus 100 provided in embodiments of this application can form different optical image stabilization solutions, and adaptability is wide.

The image sensor driving apparatus 100 and the lens driving apparatus 300 may be connected in a manner of bonding, snap-fitting, or the like. For example, as shown in FIG. 7A, the image sensor driving apparatus 100 may be connected to the lens driving apparatus 300 through a bonding member 500.

In some possible implementations, as shown in FIG. 7A, the lens driving apparatus 300 includes a housing 330 and a lens driving assembly 340. The housing 330 is enclosed to form accommodation space, and the housing 330 is configured to be secured to another functional module (for example, the image sensor driving apparatus 100). The lens driving assembly 340 is accommodated in the accommodation space of the housing 330, and the lens driving assembly 340 is configured to drive the lens assembly 400 to move.

The lens driving assembly 340 is configured to drive the lens assembly 400 to move or tilt in an axial direction (namely, a direction in which the optical axis of the image sensor 200 extends), to implement optical image stabilization, optical focusing, aberration adjustment, and the like. In addition, the lens driving apparatus 300 may also be configured to compensate for other optical parameters of the camera module 3, for example, an aberration. The lens driving apparatus 300 may drive at least some lens elements in the lens assembly 400 to move to compensate for the aberration.

As shown in FIG. 7A, the lens driving assembly 340 includes the fixed member 320 and a second movable member 310, the fixed member 320 is connected to the housing 330, and the second movable member 310 is connected to the lens assembly 400. The fixed member 320 interacts with the second movable member 310 to generate a driving force, and the driving force is used to drive the lens assembly 400 to move or tilt in the axial direction.

How the fixed member 320 interacts with the second movable member 310 to generate a driving force is not specifically limited herein. In some implementations, one of the fixed member 320 and the second movable member 310 may be a magnetic driving member, and the other of the fixed member 320 and the second movable member 310 may be a coil driving member. When the coil driving member is powered on, the coil driving member and the magnetic driving member are coupled to generate an electromagnetic driving force, to drive the lens assembly 400 to move.

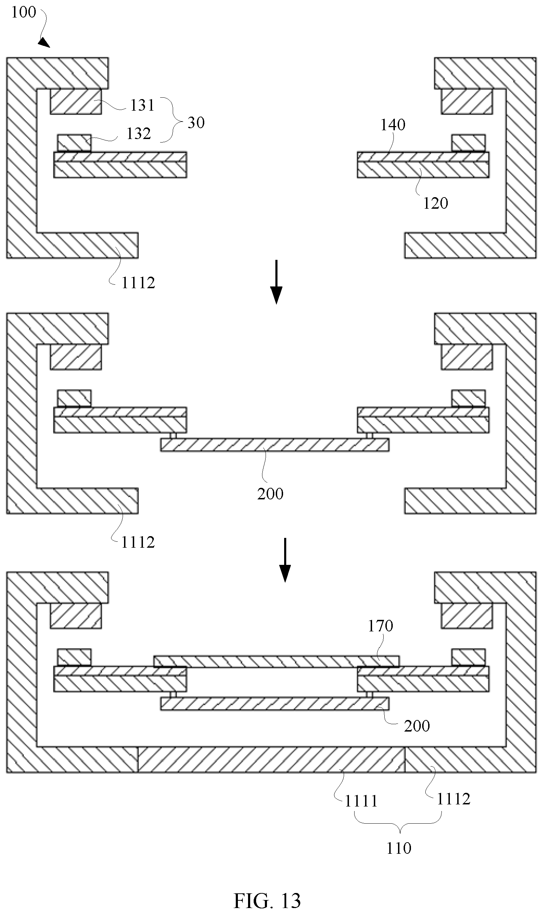

FIG. 13 is an assembling diagram of the camera module in FIG. 4 without a lens driving apparatus.

In the foregoing content, the image sensor driving apparatus 100 and the image sensor 200 are two module structures that are independent of each other. Therefore, in a manufacturing process of the camera module 3, as shown in FIG. 13, the image sensor driving assembly 130 may complete assembling and performance test in a motor factory, then may connect the image sensor 200 to a side that is of the circuit board 120 and that faces away from the reinforcing plate 140 in a flip-chip manner, and may connect the optical element 170 to the reinforcing plate 140. Finally, the inner platform 1111 and the outer platform 1112 are connected to form the fixed base 110.

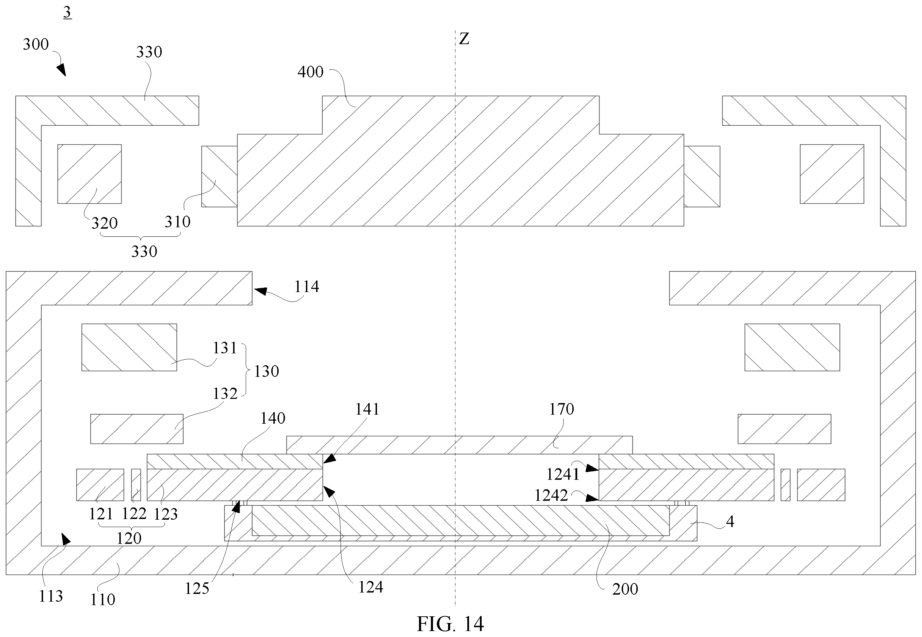

FIG. 14 is a cross-sectional view of a camera module of a second architecture according to an embodiment of this application.

A difference between FIG. 14 and FIG. 7B lies in that, the image sensor 200 is mechanically and electrically connected to the movable part 123 through a fan-out base 4. Specifically, the existing image sensor 200 may be re-wired and fanned out, and then mechanically and electrically connected to the movable part 123. In this way, there is no need to customize an image sensor 200 with a large connection spacing, and costs can be reduced. In addition, the fan-out base 4 is mechanically and electrically connected to the movable part 123, so that an area of a connection between the image sensor 200 and the movable part 123 can be increased, and difficulty in connecting the movable part 123 to the image sensor 200 can be reduced.

In the foregoing content, the image sensor driving apparatus 100 and the lens driving apparatus 300 are two module structures that are independent of each other. However, the image sensor driving apparatus 100 and the lens driving apparatus 300 may alternatively be integrated into a whole. The following describes a relationship between the image sensor driving apparatus 100 and the lens driving apparatus 300 when the image sensor driving apparatus 100 and the lens driving apparatus 300 form a whole.

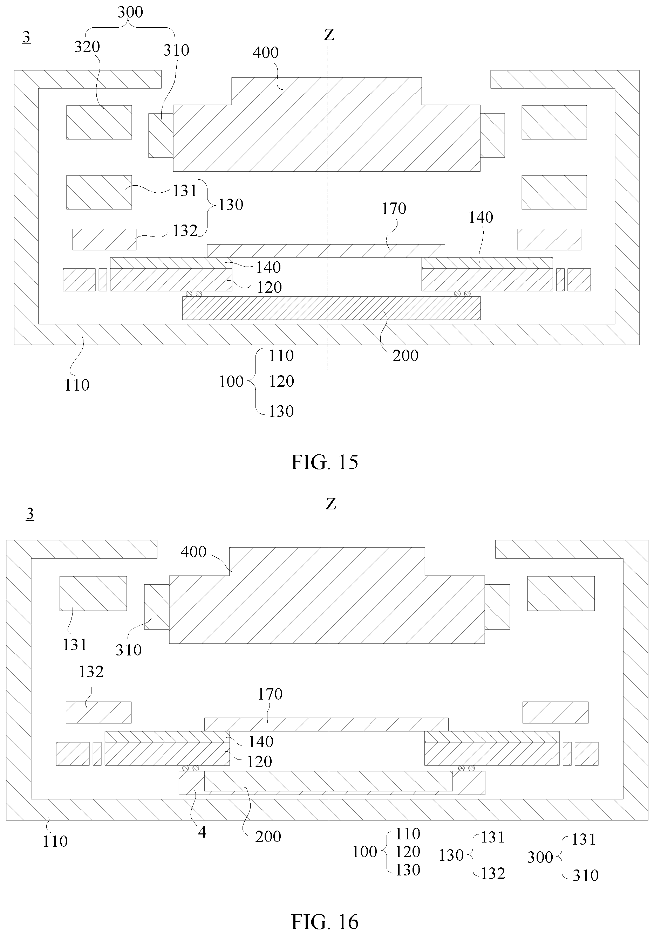

FIG. 15 is a cross-sectional view of a camera module of a third architecture according to an embodiment of this application.

A difference between FIG. 15 and FIG. 7B lies in that, the lens driving apparatus 300 is disposed inside the fixed base 110. In this case, the lens driving apparatus 300 includes a fixed member 320 and a second movable member 310, and the fixed member 320 is connected to the fixed base 110.

FIG. 16 is a cross-sectional view of a camera module of a fourth architecture according to an embodiment of this application.

A difference between FIG. 16 and FIG. 14 lies in that, the lens driving apparatus 300 is disposed inside the fixed base 110. In this case, the lens driving apparatus 300 includes a stationary member 131 and a second movable member 310. That is, the image sensor driving apparatus 100 and the lens driving apparatus 300 share the stationary member 131. For example, the stationary member 131 is a magnet. This may reduce a quantity of components and parts, make the camera module 3 more compact, and reduce costs.

It should be noted that, based on the mechanical and electrical connections between the image sensor 200 and the movable part 123 of the circuit board 120 in the flip-chip manner, at least one of the following solutions may be combined: 1. The image sensor 200 may be mechanically and electrically connected to the movable part 123 by using a fan-out technology. 2. The image sensor driving apparatus 100 and the lens driving apparatus 300 share the stationary member 131. 3. The lens driving apparatus 300 is disposed inside the fixed base 110, and the lens driving apparatus 300 includes the fixed member 320 and the second movable member 310. 4. The lens driving apparatus 300 and the image sensor driving apparatus 100 are two module structures that are independent of each other. 5. The image sensor 200 is an image sensor that does not perform a fan-out operation.

In the descriptions of embodiments of this application, it should be noted that, unless otherwise clearly specified and limited, terms "mount", "connection", and "connect" should be understood in a broad sense. For example, the terms may indicate a secured connection, may be an indirect connection through an intermediate medium, may be an internal interconnection between two elements, or may be an interaction relationship between two elements. A person of ordinary skill in the art may understand specific meanings of the foregoing terms in embodiments of this application based on specific cases.

In embodiments of this application, it is implied that an indicated apparatus or element needs to have a particular orientation, or needs to be constructed and operated in a particular orientation, and therefore cannot be construed as a limitation on embodiments of this application. In the descriptions of embodiments of this application, unless otherwise exactly and specifically ruled, "a plurality of" means two or more.

In the specification, claims, and accompanying drawings of embodiments of this application, the terms "first", "second", "third", "fourth", and the like (if existent) are intended to distinguish between similar objects but do not necessarily indicate a specific order or sequence. It may be understood that the data used in such a way is interchangeable in proper circumstances, so that embodiments of this application described herein can be implemented in other sequences than the sequence illustrated or described herein. In addition, the terms "include", "have", and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The term "a plurality of" in this specification means two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between the associated objects. In a formula, the character "/" indicates a "division" relationship between the associated objects.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. An image sensor driving apparatus, comprising a fixed base, a circuit board, and an image sensor driving assembly;
the circuit board comprises a fixed part, a flexible part, and a movable part, wherein the fixed part is connected to the fixed base, the fixed part is mechanically and electrically connected to the movable part through the flexible part, the movable part comprises a light-transmitting through-hole and a connection interface, one end of the light-transmitting through-hole is a light inlet, the other end of the light-transmitting through-hole is a light outlet facing a photosensitive surface of an image sensor, and the connection interface and the light outlet are on a same side of the movable part and configured to mechanically and electrically connect to the image sensor; and
the image sensor driving assembly comprises a stationary member and a first movable member, wherein the stationary member is connected to the fixed base, and the first movable member is connected to the movable part; and the first movable member is configured to interact with the stationary member to generate a driving force for driving the movable part to move relative to the fixed base, so that the movable part drives the image sensor to move relative to the fixed base.

2. The image sensor driving apparatus according to claim 1, wherein the movable part is of a multi-layer circuit board structure.

3. The image sensor driving apparatus according to claim 1 or 2, wherein the movable part and the flexible part are of an integrated structure.

4. The image sensor driving apparatus according to any one of claims 1 to 3, wherein the circuit board is of an integrated circuit board structure.

5. The image sensor driving apparatus according to any one of claims 1 to 4, wherein the image sensor driving apparatus further comprises a reinforcing plate, the reinforcing plate is connected to the movable part, and a projection of the reinforcing plate in an optical axis direction of the image sensor does not overlap the light-transmitting through-hole.

6. The image sensor driving apparatus according to claim 5, wherein the reinforcing plate is disposed on a side that is of the movable part and that faces away from the connection interface; and in the optical axis direction of the image sensor, the reinforcing plate covers an overlapping area of the image sensor and the movable part.

7. The image sensor driving apparatus according to any one of claims 1 to 6, wherein the movable part is in contact with the fixed base.

8. The image sensor driving apparatus according to claim 7, wherein the movable part is in rolling contact with the fixed base.

9. The image sensor driving apparatus according to claim 8, wherein the image sensor driving apparatus further comprises a movable support and a ball, the movable support is connected to the movable part, and the movable support is in rolling contact with the fixed base through the ball; or
a contact position between the movable part and the fixed base is on a side that is of the movable part and that faces away from the image sensor.

10. The image sensor driving apparatus according to any one of claims 7 to 9, wherein the image sensor driving apparatus further comprises a retention structure, and the retention structure is configured to keep the movable part in contact with the fixed base.

11. The image sensor driving apparatus according to claim 10, wherein the fixed part and the flexible part form the retention structure.

12. The image sensor driving apparatus according to claim 10 or 11, wherein the image sensor driving apparatus further comprises a magnetic member and a magnetic attraction member, the magnetic member and the magnetic attraction member form the retention structure, one of the magnetic member and the magnetic attraction member is disposed on the movable part, and the other of the magnetic member and the magnetic attraction member is disposed on the fixed base.

13. The image sensor driving apparatus according to any one of claims 1 to 12, wherein the image sensor driving apparatus further comprises the movable support, and the first movable member is secured to the movable part through the movable support; and when the image sensor driving assembly generates a driving force, the movable support drives the movable part to move relative to the fixed base.

14. The image sensor driving apparatus according to claim 13, wherein the movable support and the movable part are of an integrated structure.

15. The image sensor driving apparatus according to claim 13 or 14, wherein the movable support is further configured to be in contact with the fixed base, so that the fixed base is in contact with the movable part.

16. The image sensor driving apparatus according to any one of claims 1 to 15, wherein the fixed base comprises a fixed platform and a fixed frame, the fixed frame is connected to an edge of the fixed platform and encloses accommodating space with an opening, the opening is configured to allow incident light to enter the accommodating space, the accommodating space is used to accommodate the image sensor driving assembly, the movable part, and the image sensor, and the fixed platform and the image sensor are spaced apart in the optical axis direction of the image sensor.

17. The image sensor driving apparatus according to any one of claims 1 to 16, wherein the image sensor driving apparatus further comprises an optical element;
the optical element is disposed inside the fixed base and is connected to the side that is of the movable part and that faces away from the image sensor, and the optical element covers the light inlet; and
the optical element is connected to the movable part, or the optical element is configured to connect to the reinforcing plate.

18. The image sensor driving apparatus according to claim 17, wherein the optical element is an optical filter.

19. An optical apparatus, comprising an image sensor and the image sensor driving apparatus according to any one of claims 1 to 18, wherein a photosensitive surface of the image sensor covers the light outlet, and the image sensor is mechanically and electrically connected to the connection interface of the movable part.

20. The optical apparatus according to claim 19, wherein the optical apparatus further comprises a fan-out base, and the image sensor is mechanically and electrically connected to the connection interface of the movable part through the fan-out base.

21. The optical apparatus according to claim 19 or 20, wherein the optical apparatus further comprises a lens driving apparatus, the lens driving apparatus is configured to drive a lens assembly to move in an optical axis direction of the image sensor, and the image sensor driving apparatus is configured to drive the image sensor to move on a plane perpendicular to the optical axis direction of the image sensor, wherein
the lens driving apparatus is disposed outside the fixed base and is connected to the fixed base, or the lens driving apparatus is disposed inside the fixed base.

22. The optical apparatus according to claim 21, wherein the optical apparatus further comprises a second movable member, the second movable member is disposed inside the fixed base, and the second movable member and the stationary member form the lens driving apparatus disposed inside the fixed base.

23. An optical apparatus, comprising a lens driving apparatus and the image sensor driving apparatus according to any one of claims 1 to 18, wherein the lens driving apparatus is disposed outside the fixed base of the image sensor driving apparatus and is connected to the fixed base, the lens driving apparatus is configured to drive a lens assembly to move in an optical axis direction of an image sensor, and the image sensor driving apparatus is configured to drive the image sensor to move on a plane perpendicular to the optical axis direction of the image sensor.

24. A camera module, comprising a lens driving apparatus, a lens assembly, an image sensor, and the image sensor driving apparatus according to any one of claims 1 to 18;
the image sensor is disposed inside the image sensor driving apparatus and is mechanically and electrically connected to the connection interface of the movable part of the image sensor driving apparatus, and a photosensitive surface of the image sensor covers the light outlet of the movable part;
a light exit end of the lens assembly faces the light inlet of the movable part;
the lens driving apparatus is configured to drive the lens assembly to move in an optical axis direction of the image sensor; and
the image sensor driving apparatus is configured to drive the image sensor to move on a plane perpendicular to the optical axis direction of the image sensor.

25. An electronic device, comprising a mainboard and the camera module according to claim 24, wherein the camera module is electrically connected to the mainboard.
